# EUROPÄISCHE PATENTSCHRIFT

(11) **EP 1 666 725 B1**
(45) Veröffentlichungstag und Bekanntmachung des Hinweises auf die Patenterteilung: **03.11.2010**
(21) Anmeldenummer: 05024682.6
(22) Anmeldetag: 11.11.2005
(51) Int. Cl.: F04B 49/02, B60L 1/12

(54) **Antriebssystem für ein Fahrzeug**
Drive system for a vehicle
Système de propulsion pour véhicule

(30) Priorität: 03.12.2004 DE 102004059820
(43) Veröffentlichungstag der Anmeldung: 07.06.2006
(73) Patentinhaber: Kässbohrer Geländefahrzeug AG, 88471 Laupheim (DE)
(72) Erfinder: Ummenhofer, Gerhard, 88427 Bad Schussenried (DE)
(74) Vertreter: Patentanwälte Ruff, Wilhelm, Beier, Dauster & Partner

(56) Entgegenhaltungen:
- EP-A- 0 577 987
- WO-A-98/39179
- DE-A1- 1 936 104
- DE-A1- 19 610 927
- JP-A- 4 217 594
- JP-A- 6 249 150
- JP-A- 55 119 528

## Beschreibung

Die Erfindung betrifft ein Antriebssystem für ein Kettenfahrzeug mit einer Antriebsmaschine und mindestens einer mit einem Abtrieb der Antriebsmaschine mechanisch gekoppelten Hydraulikpumpe, wobei der mindestens einen Hydraulikpumpe mindestens ein Steuermittel in Form eines hydraulischen Stellmittels zugeordnet ist, das eine Leistungsaufnahme der mindestens einen Hydraulikpumpe in einer Startphase der Antriebsmaschine zeitweilig gegenüber einer Leistungsaufnahme in einem Betriebszustand der Hydraulikpumpe unter Aufrechterhaltung der mechanischen Kopplung verringert, wobei hierfür eine Überbrückungsleitung vorgesehen ist, mittels derer der Pumpenausgang mit dem Pumpeneingang verbunden ist, wobei das der Hydraulikpumpe zugeordnete Stellmittel ein Ventil umfasst, durch das die Überbrückungsleitung steuerbar ist.

Derartige Antriebssysteme sind in üblichen Kettenfahrzeugen zu finden. Im Bereich der Kettenfahrzeuge finden häufig hydrostatische Antriebe Anwendung, bei denen die Antriebsmaschine genutzt wird, um eine oder mehrere Hydraulikpumpen anzutreiben, welche wiederum den für die Fortbewegung des betreffenden Fahrzeugs erforderlichen Druck für Hydromotoren zur Verfügung stellen.

Bei vielen heutigen Fahrzeugen ist eine Vielzahl von Verbrauchern mechanisch unlösbar mit der Antriebsmaschine verbunden. Dies bringt die als nachteilig angesehene Konsequenz mit sich, dass diese Verbraucher unmittelbar mit dem Start der Antriebsmaschine beginnend eine Leistungsaufnahme aufweisen, die das Startverhalten der Antriebsmaschine verschlechtert. Dadurch kommt es bei den oben genannten Kettenfahrzeugen mit hydrostatischem Antrieb leicht beim Start zu einer Leistungsaufnahme der Verbraucher, die die Abgabe mechanischer Leistung durch die Antriebsmaschine übersteigt und dadurch ein Abwürgen der Antriebsmaschine zur Folge hat. Die Problematik wird zusätzlich verschärft, wenn es sich bei den Verbrauchern um solche handelt, die beim Start eine anfängliche Leistungsaufnahme aufweisen, die gegenüber der Leistungsaufnahme mit Normalbetrieb erhöht ist.

Um die erforderliche Leistung in der Startphase bereitstellen zu können, ist es bekannt, Verbraucher mechanisch vom Abtrieb der Antriebsmaschine abzukoppeln, beispielsweise durch Ausrücken der Kupplung bei einem PKW. Diese Methode ist konstruktiv allerdings verhältnismäßig aufwändig zu realisieren und wirtschaftlich nicht günstig. Je nach Art des Verbrauchers stellt eine solche mechanische Trennung auch ein Gefahrenmoment dar, beispielsweise bei der Auskuppelung von Speisepumpen eines hydraulischen Antriebssystems. Wenn die mechanische Kupplung bei einem solchen System versagt und infolge dessen der Betriebsdruck im geschlossenen Antriebskreislauf nicht gehalten werden kann, ist es beispielsweise nicht ohne weiteres möglich, gegen ein fremdbewirktes, auf den Hydromotor wirkendes Drehmoment den Hydromotor zu bremsen.

Aus der JP 55119528 ist es bekannt, eine Überbrückungsleitung vorzusehen, durch die ein Hydromotor während der Startphase eines Verbrennungsmotors aus dem Hydraulikkreislauf ausgekoppelt wird.

Aufgabe der Erfindung ist es, ein gattungsgemäßes Antriebssystem für ein Fahrzeug zu schaffen, welches gegenüber dem Stand der Technik ein verbessertes Startverhalten aufweist.

Erfindungsgemäß ist hierfür ein vorzugsweise federbelastetes Rückschlagventil in der Überbrückungsleitung vorgesehen, welches pumpenausgangsseitig einen Mindestdruck gewährleistet.

Vor allem wenn die Hydraulikpumpe in der Startphase nicht benötigt wird oder der ein zeitweiliges Aussetzen der Leistungszufuhr unproblematisch ist, ist die erfindungsgemäße Ausgestaltung des Antriebssystems zweckmäßig. Die Steuermittel zum Verringern der Leistungsaufnahme de Hydraulikpumpe können einerseits so ausgebildet sein, dass sie die Hydraulikpumpe zwischen zwei Zuständen, einem Betriebszustand und einem Startzustand mit gegenüber dem Betriebszustand verringerter Leistungsaufnahme schalten können, oder andererseits so ausgebildet sein, dass sie flexibel in stetiger Art und Weise oder in mehreren diskreten Stufen die Leistungsaufnahme der Hydraulikpumpe beeinflussen können. Die Verringerung der Leistungsaufnahme der Hydraulikpumpe während der Startphase kann sich sowohl so darstellen, dass die Hydraulikpump gar keine Leistungsaufnahme mehr aufweist, als auch so gestaltet sein, dass die Leistungsaufnahme der Hydraulikpumpe lediglich reduziert ist und gegebenenfalls eine eingeschränkte Funktionsfähigkeit der Hydraulikpumpe erhalten bleibt.

Bei der Antriebsmaschine handelt es sich vorzugsweise um einen Verbrennungsmotor, der mittels eines Startermotors in Betrieb gesetzt wird. Unter der Startphase der Antriebsmaschine ist ein Zeitraum zu verstehen, der mit der Aktivierung der Antriebsmaschine, im Falle eines Verbrennungsmotors also mit der Drehmomentübertragung vom Startermotor auf den Abtrieb der Antriebsmaschine, beginnt und der endet, wenn eine Antriebsleistung der Antriebsmaschine zur Verfügung steht, die zum gefahrlosen Starten und Betrieb der Hydraulikpumpe geeignet ist. Die Dauer der Startphase kann von verschiedenen Faktoren abhängen und das Ende der Startphase von verschiedenen Einflussgrößen abhängig gemacht werden. Eine Möglichkeit ist, die Dauer der Startphase fest vorzugeben und beispielsweise in ein elektronisches Steuergerät einzuprogrammieren. Eine andere Möglichkeit ist es, Betriebskenngrößen der Antriebsmaschine und/oder der Hydraulkpumpe zu sensieren und in Abhängigkeit davon das Ende der Startphase festzulegen. Darüber hinaus ist es möglich, im Verlauf der Startphase auftretende Ereignisse mittels geeigneter Detektoren zu erkennen und das Ende der Startphase danach zu bemessen. So kann beispielsweise der Zeitraum, in dem eine Spannung am Startermotor anliegt, als Startphase verwendet werden.

Durch das Aufrechterhalten der mechanischen Kopplung zwischen der Hydraulikpumpe als Verbraucher und der Antriebsmaschine ist es nicht erforderlich, eine mechanische Trennung, beispielsweise durch eine Schaltkupplung, vorzusehen, welche je nach Art der Hydraulikpumpe und seiner Kopplung mit der Antriebsmaschine technisch aufwändig sein kann. Stattdessen wird bei bestehender Kopplung die Leistungsaufnahme der Hydraulikpumpe reduziert. Bei einer mit einer rotierenden Abtriebswelle der Antriebsmaschine verbundenen Hydraulikpumpe äußert sich dies darin, dass ein Gegendrehmoment, das in der Startphase von der Hydraulikpumpe auf die Abtriebswelle wirkt, gegenüber einem Gegendrehmoment im Betriebszustand verringert ist. Die Folge ist, dass die Abtriebswelle schneller eine hohe Rotationsgeschwindigkeit erreicht und die Gefahr des Abwürgens verringert wird. Wenn die Rotationsgeschwindigkeit ausreichend hoch ist, um die zusätzliche Leistungsaufnahme der Hydraulikpumpe im Betriebszustand leisten zu können, wird die Hydraulikpumpe mittels des zugeordneten Steuermittels in ihren Betriebszustand versetzt.

Erfindungsgemäß ist der hydraulische Verbraucher mittels des hydraulischen Stellmittels kurzschließbar ist.

Die Hydraulikpumpe kann insbesondere als Speisepumpen für den Fahrantrieb sowie für Zusatzfunktionen wie Haspel- oder Windenantrieb, hydraulischer Lüfterantrieb für einen Verbrennungsmotor oder Arbeitshydraulik zur Verstellung eines Heckgeräteträgers oder eines frontseitigen Anbaubereichs wie Räumschild oder ähnliches dienen. Durch das Kurzschließen der Hydraulikpumpe wird erreicht, dass von dieser geförderte Hydraulikflüssigkeit, ohne durch weitere Komponenten des hydraulischen Systems geleitet zu werden, unmittelbar vom Ausgang der Hydraulikpumpe zu deren Eingang geleitet werden kann, so dass die von der Hydraulikpumpe aufgenommene mechanische Arbeit gering sein kann. Für den Betrieb eines hydrostatischen Antriebs mit geschlossenem Kreislauf ist im Normalbetrieb ein entsprechender Grunddruck bzw. Speisedruck erforderlich. Dieser wird während der Startphase abgeschaltet. Der Kurzschluss kann unmittelbar zwischen einem Einlass und einem Auslass der Hydraulikpumpe hergestellt werden, so dass sich ein Druckausgleich zwischen Einlass und Auslass einstellt, soweit keine weiteren Komponenten dies einschränken. Im Zusammenhang mit der vorliegenden Erfindung wird unter Kurzschluss auch eine direkte Verbindung verstanden, in der druckabhängige Rückschlagventile oder vergleichbare hydraulische Komponenten, wie Druckminderungsventile, Druckbegrenzungsventile etc., vorgesehen sind, die einen vollständigen Druckausgleich zwischen Eingang und Ausgang der Hydraulikpumpe verhindern.

Die Leistungsaufnahme einer Hydraulikpumpe hängt maßgeblich davon ab, wie groß der Druckunterschied zwischen der Pumpenausgangsseite und der Pumpeneingangsseite ist. Durch eine Überbrückungsleitung, die den Pumpenausgang mit dem Pumpeneingang verbindet, können sich identische oder nur geringfügig voneinander abweichende Druckverhältnisse am Pumpeneingang und Pumpenausgang einstellen, sofern keine weiteren hydraulischen Schaltungselemente in der Überbrückungsleitung vorgesehen sind. Der geringe oder nicht vorhandene Unterschied zwischen dem Druck am Pumpeneingang und am Pumpenausgang führt dazu, dass nur eine geringe mechanische Energie zum Betrieb der Pumpe erforderlich ist. Das in der Überbrückungsleitung vorgesehene Ventil übernimmt die Aufgabe des Stellmittels, mittels dessen die Leistungsaufnahme der Hydraulikpumpe gesteuert werden kann. Wenn das Ventil geöffnet ist, ist die Überbrückungsleitung aktiv und die Leistungsaufnahme der Hydraulikpumpe dementsprechend gering. Wird das Ventil geschlossen, so ist damit die Überbrückungsleitung unterbrochen, so dass sich mit zunehmender Fördermenge der Hydraulikpumpe ein Überdruck pumpenausgangsseitig einstellt, der die Leistungsaufnahme der Hydraulikpumpe erhöht. Das Steuern der Überbrückungsleitung kann auf Öffnen des Ventils und Schließen des Ventils begrenzt sein oder auch zusätzlich das Einstellen einer variablen Druckbegrenzungs- oder Druckminderungswirkung gestatten. Neben der Steuerung des Ventils und damit der Funktion der Überbrückungsleitung durch ein elektrisches Signal ist auch eine Steuerung auf hydraulischer oder pneumatischer Basis zweckmäßig. Vorzugsweise ist das als Stellmittel wirkende Ventil ein elektrisch betätigtes Magnetventil.

Das erfindungsgemäß vorgesehene Rückschlagventil ist derart in die Überbrückungsleitung eingebaut, dass es sich erst dann öffnet, wenn eine bestimmte Mindestdruckdifferenz, insbesondere 2 bis 3 bar, zwischen Pumpeneingangseite und Pumpenausgangsseite herrscht. Der Druckabfall auf der Pumpenausgangsseite bei geöffnetem Ventil wird somit begrenzt. Der dadurch aufrechterhaltene Mindestdruck bringt mehrere Vorteile mit sich: Zum einen verkürzt er den Zeitraum, der nach Ende der Startphase erforderlich ist, um den Betriebsdruck pumpenausgangsseitig wiederherzustellen. In dem Augenblick, in dem zum Ende der Startphase das Ventil in der Überbrückungsleitung geschlossen wird, beginnt der Druck pumpenausgangsseitig ausgehend von dem Mindestdruck anzusteigen. Zum anderen ist durch den Mindestdruck gewährleistet, dass die Hydraulikflüssigkeit nicht in Folge eines geringen Drucks auf der Pumpeneingangsseite vollständig aus der Hydraulikpumpe entweicht und es somit zu einem schädlichen Trockenlaufen der Hydraulikpumpe kommt. Dies ist insbesondere bei offenen Hydrauliksystemen von Belang, bei denen die Hydraulikpumpe pumpeneingangsseitig mit einem nicht unter Überdruck stehenden Versorgungstank mit Hydraulikflüssigkeit verbunden ist.

In einer Weiterbildung der Erfindung sind die Überbrückungsleitung und das Stellmittel in ein Gehäuse der Hydraulikpumpe integriert.

Eine derartige Hydraulikpumpe ist bezüglich der Montage besonders einfach zu handhaben. Sie bietet einen Pumpeneingangsanschluss und einen Pumpenausgangsanschluss sowie eine beispielsweise elektrische Anschlussmöglichkeit zur Steuerung des Stellmittels. Da die Überbrückungsleitung und das Stellmittel nicht viel Raum in Anspruch nehmen, kann eine derartige Hydraulikpumpe mit integrierter Überbrückungsleitung und integriertem Stellmittel bezüglich der Baumaße identisch einer Hydraulikpumpe ohne diese zusätzlichen Komponenten sein. Dies ermöglicht ein einfaches Nachrüsten derartiger Hydraulikpumpen in Antriebssysteme, die für herkömmliche Hydraulikpumpen ausgelegt sind.

In einer besonderen Ausgestaltung der Erfindung ist die Hydraulikpumpe eine Speisepumpe, mittels derer der Betriebsdruck in einem hydrostatischen Antriebskreislauf des Antriebssystems aufrechterhalten wird.

Bei Speisepumpen ist es nicht nachteilig, wenn sie für einen kurzen Zeitraum des Betriebs nicht in Funktion sind oder nur einen Minimaldruck erzeugen, da zur Aufrechterhaltung des Betriebsdrucks im hydrostatischen Antriebskreislauf an der Zuleitung von der Speisepumpe in aller Regel Rückschlagventile vorgesehen sind. Durch diese Rückschlagventile ist der geschlossene Antriebskreislauf von einer Hydraulikflüssigkeitszuführung dahingehend getrennt, dass es bei einem Druckabfall in der Zuführung in Folge der geöffneten Überbrückungsleitung nicht zu einem Rückfluss von Hydraulikflüssigkeit vom Antriebskreislauf in die Zuführung und damit einhergehenden Druckverlust im Antriebskreislauf kommt. Im Normalfall ist also allenfalls mit einem geringen Druckabfall im hydrostatischen Antriebskreislauf während der Startphase der Antriebsmaschine zu rechnen. Darüber ist es gerade bei Speisepumpen zweckmäßig, die Leistungsaufnahme zu reduzieren, da sie im Betriebszustand üblicherweise eine hohe Druckdifferenz zwischen Pumpenausgangsseite und Pumpeneingangsseite aufweisen.

In einer Weiterbildung der Erfindung umfasst das Steuermittel ein Zeitverzögerungsmittel, welches eine mit einem Steuersignal bezweckte Steuerwirkung des Steuermittels zeitlich gegenüber einem Auftreten des Steuersignals verzögert.

Das Steuersignal ist dabei vorzugsweise ein elektrisches Signal. Das Zeitverzögerungsmittel kann beispielsweise ein Zeitrelais sein, welches eine feste oder eine einstellbare Verzögerung zwischen Auftreten des Steuersignals und Schalten des Relais vorsieht. Durch das Zeitverzögerungsmittel ist es möglich, einen zeitlichen Abstand zwischen der Steuerwirkung und dem Steuersignal zu bewirken, was insbesondere dann zweckmäßig ist, wenn das Steuersignal durch das Eintreten eines zeitlich festgelegten Umstandes im Zuge der Startphase ausgelöst wird. So kann beispielsweise, wenn die mechanische Kopplung zwischen einer Abtriebswelle der Antriebsmaschine und dem Startmotor das Ende der Startphase definiert, eingestellt werden, dass nach Trennung von Antriebswelle und Startmotor noch einige Sekunden gewartet wird, bis die Hydraulikpumpe in ihren Betriebszustand geschaltet und damit in einen Zustand erhöhter Leistungsaufnahme versetzt wird. Durch eine solche Sicherheitsverzögerung kann die Gefahr nochmals verringert werden, dass es gegen Ende der Startphase zu einem Abwürgen der Antriebsmaschine kommt. Die Zeitverzögerungsmittel müssen nicht als eine Baueinheit mit dem Steuermittel ausgebildet sein. Ebenso ist es denkbar und von dieser Erfindung umfasst, dass ein separates Zeitverzögerungsmittel oder ein entsprechend ausgebildetes Programm eines Steuergeräts verwendet wird, welches eine verzögerte Weitergabe des Steuersignals bewirkt.

In einer Weiterbildung der Erfindung weist das Antriebssystem mindestens zwei Verbraucher mit jeweils mindestens einem Steuermittel auf, wobei die Steuermittel so ausgebildet sind, dass eine jeweils mit dem Auftreten eines Steuersignals gekoppelte Steuerwirkung in unterschiedlichem zeitlichen Abstand zum Auftreten des Steuersignals bewirkt wird.

Dies ist besonders dann zweckmäßig, wenn die jeweiligen Steuermittel der zwei Verbraucher so geschaltet sind, dass sie auf dieselben Steuersignale reagieren. In einem solchen Fall besteht die Gefahr, dass das gleichzeitige Schalten der jeweils zugeordneten Verbraucher in den jeweiligen Betriebszustand einen steilen Anstieg des Leistungsbedarfs an dem Abtrieb der Antriebsmaschine verursacht, der von der Antriebsmaschine nicht geleistet werden kann. Wenn die Steuermittel jedoch so ausgebildet sind, dass zumindest eines von ihnen seine Steuerwirkung erst in einem zeitlichen Abstand zum Auftreten des Steuersignals bewirkt, kann ein zeitlicher Abstand zwischen dem Schalten der jeweils zugeordneten Verbraucher in ihren jeweiligen Betriebszustand erreicht werden. Die technische Realisierung kann beispielsweise mittels eines oder mehrerer Zeitrelais oder mittels eines Programms eines Steuergeräts erfolgen. Eine solche Ausbildung der Steuermittel ist besonders bei Verbrauchern zweckmäßig, die während eines Startvorgangs eine gegenüber einem Betriebszustand höhere Leistungsaufnahme aufweisen. Bezogen auf einen solchen Verbraucher kann erreicht werden, dass der Betriebszustand mit gegenüber dem Startvorgang verminderter Leistungsaufnahme erreicht ist, bevor ein weiterer Verbraucher gestartet wird.

In einer Weiterbildung der Erfindung ist das Steuermittel unmittelbar mit einem Starter des Fahrzeugs verbunden und so ausgebildet, dass es für die Dauer eines anliegenden Starterstroms eine Steuerwirkung bewirkt.

Eine solche Realisierung ist technisch besonders einfach. Der Starterstrom, der unmittelbar oder mittelbar über einen Magnetschalter oder ein Relais eine Versorgung des Startermotors mit elektrischer Leistung bewirkt, wird mittels entsprechender Steuerleitungen dem Steuermittel der Hydraulikpumpe zugeführt. Insbesondere, wenn die Steuermittel elektrisch schaltbar sind, beispielsweise elektrisch schaltbare Magnetventile, stellt dies eine zweckmäßige Lösung dar. So kann bewirkt werden, dass für die Zeitspanne, die der Fahrer einen Startknopf des Fahrzeugs drückt oder einen Zündschlüssel in einer Start-Stellung hält, die Hydraulikpumpe in einem Zustand verminderter Leistungsaufnahme verbleibt. Wenn der Startknopf nach Überschreiten der vom Startermotor bewirkten Drehzahl losgelassen wird bzw. die Start-Stellung durch Zurückdrehen des Schlüssels verlassen wird, wird gleichzeitig erreicht, dass die Hydraulikpumpe in seinen Betriebszustand übergeht und gemäß seiner normalen Funktionsweise arbeitet.

In einer Weiterbildung der Erfindung weist das Antriebssystem einen mit dem Abtrieb der Antriebsmaschine mechanisch lösbar wirkverbundenen Startermotor sowie einen Sensor zur Ermittlung des Kopplungszustandes von Startermotor und Abtrieb auf, wobei zwischen dem Sensor und dem Steuermittel eine Steuerleitung vorgesehen ist.

Bei einem solchen Antriebssystem dauert die Startphase demnach so lange, bis die Kopplung zwischen Startermotor und Abtrieb getrennt wird. Dies ist insbesondere dann zweckmäßig, wenn die Trennung durch mechanische Einflussfaktoren, insbesondere die Drehzahl des Abtriebs, bestimmt wird. Die Trennung von Startermotor und Abtrieb ist ein sicheres Zeichen dafür, dass die Antriebsmaschine eigenständig läuft.

In einer Weiterbildung der Erfindung sind die Steuermittel mit einem an den Abtrieb der Antriebsmaschine gekoppelten Drehzahlgeber verbunden und so ausgebildet, dass eine Steuerwirkung in Abhängigkeit einer ermittelten Drehzahl bewirkt wird.

Dies ist eine zweckmäßige Ausgestaltung, da die Leistung der Antriebsmaschine üblicherweise mit deren Drehzahl in direktem Zusammenhang steht. Von der Drehzahl kann daher auf die Leistung der Antriebsmaschine geschlossen werden, so dass - eine sinnvoll gesetzte Drehzahlschwelle vorausgesetzt - eine ausreichende Antriebsleistung zur Verfügung steht, um die Leistungsaufnahme der Hydraulikpumpe gestatten zu können. Diese Ausgestaltung kann zum Beispiel durch ein elektronisches Steuergerät oder eine Relais- oder Transistorschaltung realisiert werden.

In einer Weiterbildung der Erfindung ist das Steuermittel mit einem elektronischen Steuergerät verbunden, welches in Abhängigkeit von Fahrparametern, Parametern des hydraulischen Antriebssystems und/oder Umgebungsparametern das Steuermittel steuert.

Ein solches elektronisches Steuergerät gestattet die Einbeziehung einer Vielzahl von Parametern, um einen idealen Zeitpunkt zum Versetzen des Hydraulikpumpe in ihren Betriebszustand abzuschätzen. Die Parameter können dabei beispielsweise eine Drehzahl des Abtriebs der Antriebsmaschine, eine Öltemperatur, eine Ölviskosität und/oder einen Öldruck in einem hydraulischen Antriebssystem, einen Umgebungsdruck sowie eine Umgebungstemperatur umfassen. Mittels eines elektronischen Steuergeräts ist es darüber hinaus einfach möglich, mehrere Verbraucher mit jeweils zugeordneten Steuermitteln zeitlich versetzt zueinander in ihren Betriebszustand zu schalten, so dass ein plötzlicher und starker Anstieg der Leistungsaufnahme der Verbraucher vermieden wird. Vorzugsweise ist das Steuergerät so ausgebildet, dass es den gesamten Startvorgang des Fahrzeugs, d.h. die mechanische Kopplung des Startermotors mit der Abtriebswelle der Antriebsmaschine, die Stromversorgung des Startermotors, die Trennung von Startermotor und Abtriebswelle sowie die Steuermittel aller Verbraucher steuert.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren insbesondere in Form von Unterkombinationen verwirklicht sein und vorteilhafte sowie für sich schutzfähige Ausführungen darstellen können, für die hier Schutz beansprucht wird.

Ausführungsbeispiele der Erfindung sind in den Zeichnungen schematisch dargestellt und werden im folgenden näher erläutert. In den Zeichnungen zeigen:
- Fig. 1: eine erste Ausführungsform des erfindungsgemäßen Antriebs- systems mit einem hydrostatischen Antriebskreislauf,
- Fig. 2: ein Kettenfahrzeug mit einer zweiten Ausführungsform des er- findungsgemäßen Antriebssystems in einer Seitenansicht, und
- Fig. 3: ein Blockschaltbild des Antriebssystems nach Fig. 1 für beide Kettenlaufwerkseiten des Kettenfahrzeugs.

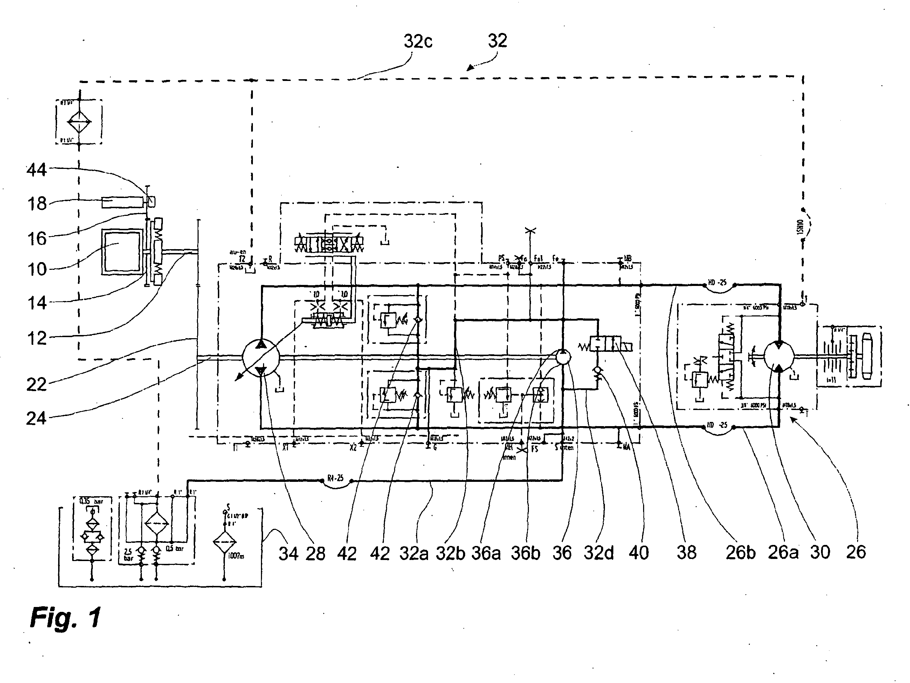

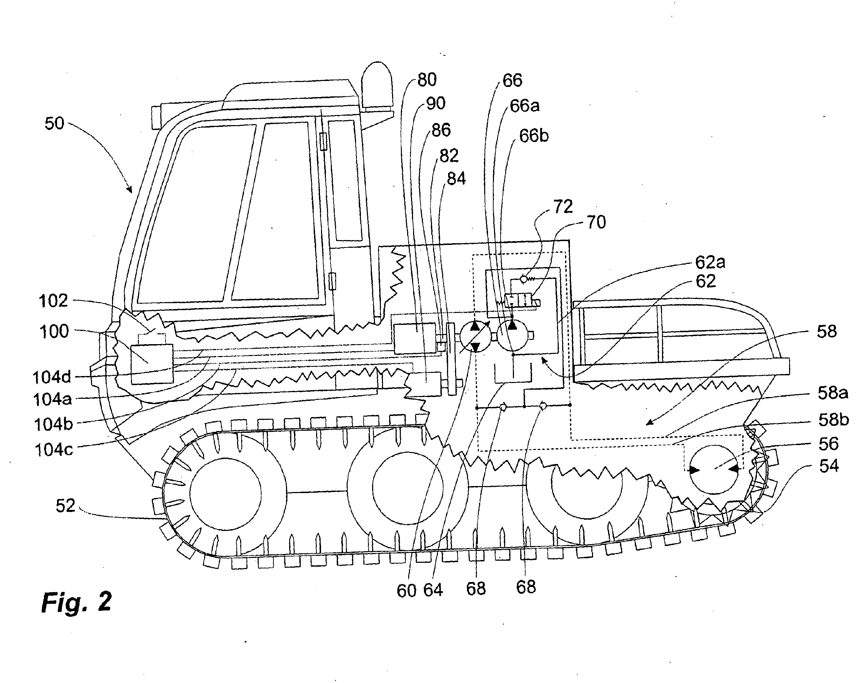

Das Antriebssystem gemäß Fig. 1 ist in nicht näher dargestellter Weise einem Kettenfahrzeug, insbesondere zur Schneepistengestaltung und -pflege, zugeordnet und übernimmt einen Fahrantrieb des Kettenfahrzeugs. Die grundsätzliche Funktion des Fahrantriebs entspricht der Ausführungsform nach Fig. 2, so dass für die Ausführungsform nach Fig. 1 ergänzend auf die Offenbarung der Ausführungsform gemäß Fig. 2 verwiesen wird. Dargestellt ist lediglich eine einzelne Antriebsseite für eines der beiden Kettenlaufwerke. Der Teil des Antriebssystems für das gegenüberliegende Kettenlaufwerk ist entsprechend symmetrisch gestaltet. Das Antriebssystem verfügt über eine als Verbrennungsmotor ausgebildete Antriebsmaschine 10. An deren Abtriebswelle 12 ist ein Zahnrad 14 vorgesehen, welches während des Startens der Antriebsmaschine 10 mit einem Starterritzel 16 eines Startermotors 18 in Eingriff ist. Die Abtriebswelle 12 der Antriebsmaschine 10 ist darüber hinaus über ein Verteilergetriebe 22 mit einer Pumpenwelle 24 wirkverbunden. Bei der vorliegenden Ausführungsform ist lediglich eine Pumpenwelle 24 dargestellt. Für den gegenüberliegenden Antriebsteil des anderen Kettenlaufwerks ist das Verteilergetriebe an der Abtriebswelle 12 so gestaltet, dass es in entsprechend symmetrischer Weise mit einer gegenüberliegenden Pumpenwelle und einem analogen Teil des Antriebssystems in Verbindung steht.

Das Antriebssystem weist darüber hinaus einen geschlossenen Hydraulikkreislauf 26 auf, der sich aus zwei Leitungsabschnitten 26a, 26b zusammensetzt, die jeweils mit einer Verstellpumpe 28 sowie einem Hydromotor 30 verbunden sind. Je nach gewünschter Drehrichtung stellt jeweils der eine Leitungsabschnitt 26a, 26b die Hochdruckleitung und der andere Leitungsabschnitt 26b, 26a die Niederdruckleitung dar. Der geschlossene Kreislauf 26 wird über einen offenen Kreislauf 32 mit Hydraulikflüssigkeit gespeist. Der offene Kreislauf 32 weist einen ersten Leitungsabschnitt 32a auf, der von einem Hydraulikflüssigkeitsbehälter 34 zu einer als Speisepumpe für den geschlossenen Kreislauf 26 agierenden Konstantpumpe 36 führt, einen zweiten Leitungsabschnitt 32b, der von der Konstantpumpe 36 zum geschlossenen Kreislauf 26 führt, sowie einen dritten Leitungsabschnitt 32c, der als Leckageleitung dient und die bei Überdruck aus dem geschlossenen Kreislauf 26 entweichende Hydraulikflüssigkeit zurück zum Hydraulikflüssigkeitsbehälter 34 führt.

Im Bereich der Konstantpumpe 36 ist eine Überbrückungsstrecke 32d vorgesehen, die einen ausgangsseitigen Pumpenanschluss 36a der Konstantpumpe 36 mit einem eingangsseitigen Pumpenanschluss 36b der Konstantpumpe 36 verbindet. In der Überbrückungsstrecke sind ein elektrisch schaltbares Magnetventil 38 sowie ein federbeaufschlagtes Rückschlagventil 40 vorgesehen, welches erst bei einem gegebenen Überdruck im zweiten Leitungsabschnitt 36b öffnet. Das elektrisch schaltbare Magnetventil 38 ist derart ausgebildet, dass es beim Anliegen einer Spannung geöffnet wird.

Sowohl die Verstellpumpe 28 als auch die Konstantpumpe 36 werden mit mechanischer Leistung über die Pumpenwelle 24 versorgt.

Im geschlossenen Kreislauf 26 stellt sich im Betrieb in der jeweiligen Hochdruckleitung ein Druck von 30 bar bis 450 bar und in der Niederdruckleitung ein Druck von 20 bar bis 35 bar ein. Im Betriebszustand ist das Magnetventil 38 geschlossen und die Überbrückungsleitung 32d demzufolge deaktiviert. In der Zuleitung 32b hinter der Konstantpumpe 36 herrscht ebenfalls ein Speisedruck von 20 bis 35 bar, der ausreicht, um gegen Rückschlagventile 42 die Hydraulikflüssigkeit dem geschlossenen Kreislauf 26 zuzuführen. Im Abschnitt 32a zwischen dem Hydraulikflüssigkeitsbehälter 34 und der Konstantpumpe 36 herrscht ein Druck von ca. 1 bar. Die Konstantpumpe 36 muss demzufolge im Betrieb eine mechanische Leistung aufbringen, die ausreicht, um den Druck der Hydraulikflüssigkeit von 1 bar auf ca. 20 bis 35 bar zu erhöhen.

Die erforderliche Leistung ist so hoch, dass beim Anlassen der Antriebsmaschine 10 die Gefahr besteht, dass diese aufgrund des hohen Leistungsbedarfs der Konstantpumpe 36 abgewürgt wird. Um dies zu verhindern, wird während eines Startvorgangs das Magnetventil 38 geöffnet, so dass die Überbrückungsleitung 32d aktiviert wird. Infolgedessen fällt der Druck im Leitungsabschnitt 32c des offenen Kreislaufs 32 ab, da die dort unter hohem Druck befindliche Hydraulikflüssigkeit über die Überbrückungsleitung 32d und den Leitungsabschnitt 32a in den Hydraulikflüssigkeitsbehälter 34 abfließen kann. Durch das federbelastete Rückschlagventil 40 wird verhindert, dass sich der Überdruck im Leitungsabschnitt 32b gegenüber dem Leitungsabschnitt 32a komplett abbaut. Das federbelastete Rückschlagventil 40 sorgt dafür, dass ein Mindestdruck von 4 bis 5 bar im Leitungsabschnitt 32b erhalten bleibt.

In der Startphase mit geöffnetem Magnetventil 38 herrscht aufgrund des geöffneten Magnetventils 38 am Pumpenausgang ein Druck von ca. 4 bis 5 bar und am Pumpeneingang ein Druck von nur 1 bar. Die erforderliche mechanische Leistung zum Betrieb der Konstantpumpe 36 ist demzufolge gegenüber dem Betriebszustand deutlich verringert. Die derart verringerte Leistungsaufnahme stellt beim Anlassen der Antriebsmaschine 10 kein Problem für die Antriebsmaschine 10 dar.

Wenn die Antriebsmaschine 10 eine Drehzahl erreicht hat, die über der Drehzahl des Startermotors 18 liegt, wird die mechanische Wirkverbindung zwischen dem Starterritzel 16 und dem Zahnrad 14 getrennt. Dies wird von einem dafür vorgesehenen Detektor 44 erkannt. Über ein nicht dargestelltes Steuergerät wird in Reaktion auf die mechanische Trennung von Startermotor 18 und Abtriebswelle 12 der Antriebsmaschine 10 das Magnetventil 38 geschlossen, so dass die Überbrückungsleitung 32d unterbrochen wird. Infolgedessen wird der Druck im Abschnitt 32c des offenen Kreislaufs 32 von der Konstantpumpe 36 wieder erhöht, deren Leistungsbedarf dadurch wieder ansteigt, bis der Betriebsspeisedruck von 20 bis 35 bar im Abschnitt 32c des offenen Kreislaufs 32 wieder hergestellt ist. Im Zuge des Ansteigens dieses Drucks steigt auch die Leistungsaufnahme der Konstantpumpe 36 an, bis eine Betriebsleistungsaufnahme erreicht ist und die Konstantpumpe 36 ihre Aufgabe als Speisepumpe für den geschlossenen Kreislauf 26 wahrnehmen kann.

Durch die Überbrückungsleitung 32c mit dem Magnetventil 38 und dem Rückschlagventil 40 wird also erreicht, dass die Leistungsaufnahme der Konstantpumpe 36 während einer Startphase so weit absenkbar ist, dass ein sicheres Anlaufen der Antriebsmaschine 10 nicht behindert wird.

In nicht dargestellter Weise kann das Magnetventil gleichzeitig auch zur Absenkung der Leistungsaufnahme der Speisepumpe des gegenüberliegenden Kettenlaufwerks vorgesehen sein. Hier ist die Überbrückungsleitung so ausgeführt, dass sie beide Speisepumpen erfasst und so eine Schaltung des Magnetventils zeitgleich eine entsprechende Absenkung der Leistungsaufnahme beider Speisepumpen bewirkt.

Alternativ ist jeder Speisepumpe eine eigene Überbrückungsleitung zugeordnet, und in jeder Überbrückungsleitung ist jeweils ein Magnetventil vorgesehen. Die Schaltung beider Magnetventile erfolgt insbesondere zeitgleich analog der beschriebenen Ausführungen.

Fig. 2 zeigt eine zweite Ausführungsform eines erfindungsgemäßen Antriebssystems. Dieses dient ebenfalls zum Antrieb eines Kettenfahrzeugs 50. Die linke Kette 52 des Kettenfahrzeugs 50 wird über ein Antriebsrad 54 angetrieben, welches wiederum von einem Hydromotor 56 angetrieben wird. Der Hydromotor 56 ist Teil eines geschlossenen hydraulischen Kreislaufs 58. Die in Fig. 2 dargestellten hydraulischen Komponenten sind alle der linken Kette 52 des Kettenfahrzeugs 52 zugeordnet. Für die in der Zeichnung nicht dargestellte rechte Kette sind entsprechende Komponenten vorhanden, die jedoch nicht dargestellt sind. Die folgende Beschreibung gilt jedoch gleichermaßen für die jeweiligen hydraulischen Komponenten beider Ketten.

Der geschlossene Kreislauf 58 weist zwei Leitungsabschnitte 58a, 58b auf, die mit jeweils einem Ende an einer Verstellpumpe 60 und mit dem jeweils anderen Ende am Hydromotor 56 angeschlossen sind. Je nach Förderrichtung der Verstellpumpe 60 und damit je nach Drehrichtung des Hydromotors 56 stellt einer der beiden Leitungsabschnitte 58a, 58b die Hochdruckleitung und der jeweils andere die Niederdruckleitung des geschlossenen Kreislaufs 58 dar.

Zur Aufrechterhaltung des Betriebsdrucks im geschlossenen Kreislauf 58 dient ein in der Zeichnung nur teilweise dargestellter offener Kreislauf 62. In diesem wird aus einem Hydraulikflüssigkeitsbehälter 64 durch eine Konstantpumpe 66 Hydraulikflüssigkeit in den geschlossenen Kreislauf 58 gepumpt, wobei Rückschlagventile 68 das Entweichen von Hydraulikflüssigkeit aus dem geschlossenen Kreislauf 58 in den offenen Kreislauf 62 entgegen der Pumprichtung der Konstantpumpe 66 verhindern. Im offenen Kreislauf 62 ist eine Überbrückungsleitung 62a vorgesehen, die einen Pumpenausgang 66a der Konstantpumpe 66 mit einem Pumpeneingang 66b der Konstantpumpe 66 verbindet. In der Überbrückungsleitung sind hintereinander ein elektrisch schaltbares Magnetventil 70 sowie ein federbeaufschlagtes Rückschlagsventil 72 vorgesehen, welches öffnet, wenn ein ausreichender Überdruck auf der Pumpenausgangsseite gegenüber der Pumpeneingangsseite besteht.

Die Verstellpumpe 60 sowie die Konstantpumpe 66 werden über eine Abtriebswelle 82 eines Verbrennungsmotor 80 mit mechanischer Leistung versorgt. Diese mechanische Kopplung ist nicht lösbar.

Über einen Riementrieb 84 ist ein Generator 90 ebenfalls mit der Abtriebswelle 68 der Antriebsmaschine 70 mechanisch unlösbar gekoppelt. Bei diesem Generator 90 handelt es sich um eine Drehstrommaschine mit einer Erregerwicklung und einer Ständerwicklung. Die Erregerwicklung des Generators 90 ist mittels eines nicht dargestellten Relais unterbrechbar.

Darüber hinaus ist ein elektronisches Steuergerät 100 vorgesehen, welches mit einem im Fahrerhaus angeordneten Startschalter 102 verbunden ist. Über eine Signalleitung 104a ist das Steuergerät 100 mit einem Anlasser der Antriebsmaschine 80 verbunden. Daneben ist das Steuergerät 100 mit einem Frequenzsensor 86 verbunden, der die Rotationsfrequenz der Abtriebswelle 82 misst und an das Steuergerät 100 über eine Signalleitung 104b weitergibt.

Darüber hinaus ist das Steuergerät 100 mit dem Relais zur Trennung der Erregerwicklung des Generator 90 sowie mit dem Magnetventil 70 über jeweils eine Signalleitung 104c, 104d verbunden. Dadurch kann mittels einer Signalspannung vom Steuergerät 100 einerseits das Relais des Generators 90 geöffnet werden, so dass die Erregerwicklung nicht mit Strom versorgt wird, und andererseits das Magnetventil 70 geöffnet werden, so dass die Überbrückungsleitung 62a zwischen dem Pumpenausgang 66a und dem Pumpeneingang 66b geöffnet wird.

Zum Starten der Antriebsmaschine 80 wird vom Fahrer des Fahrzeugs der Startschalter 102 betätigt. Dadurch bekommt das Steuergerät 80 einen Startimpuls. In Reaktion auf diesen Startimpuls wird vom Steuergerät 80 eine Spannung an den Signalleitungen 104c, 104d angelegt. Dies hat zur Folge, dass einerseits die Erregerwicklung im Generator 74 mittels des Relais unterbrochen wird und andererseits das Ventil 70 geöffnet wird. Anschließend wird vom Steuergerät 100 eine Spannung an der Signalleitung 104a angelegt, wodurch der Start der Antriebsmaschine 80 mittels eines nicht dargestellten Anlassers bewirkt wird. Durch die Unterbrechung der Erregerwicklung ist ein dem Antriebsmoment der Antriebsmaschine 80 entgegenwirkendes Gegenmoment durch den Generator 90 auf Reibungsverluste und das Trägheitsmoment beschränkt und daher gering. Durch das Öffnen des Ventils 70 ist der Hydraulikflüssigkeitsdruck auf der Pumpenausgangsseite auf einen durch das Rückschlagventil 84 vorgegebenen Wert von ca. 4 bis 5 bar reduziert. Die Verstellpumpe 66 muss dementsprechend lediglich gegen eine Druckdifferenz von ca. 3 bis 4 bar pumpen. Infolgedessen ist auch das von der Konstantpumpe 66 auf die Abtriebswelle 82 der Antriebsmaschine 80 dem Antriebsmoment entgegenwirkende Gegenmoment gering.

Nachdem die Drehzahl der Abtriebswelle 82 einen gegebenen Grenzwert überschritten hat, wird vom Steuergerät 100 das Steuersignal auf den Steuerleitungen 104a, 104c beendet. Dadurch wird zum einen der Anlasser der Antriebsmaschine 80 deaktiviert und zum anderen die Erregerwicklung des Generators 90 wieder geschlossen, so dass der Generator 90 mit der Stromerzeugung beginnt.

Nach Ablauf eines im Steuergerät 100 fest vorgegebenen Zeitintervalls nach der Beendigung des Steuersignals auf den Steuerleitungen 104a, 104c wird auch das Steuersignal auf der Steuerleitung 104d beendet, wodurch das Magnetventil 70 geschlossen wird, so dass die Überbrückungsleitung 62a unterbrochen wird und der Druck auf der Ausgangsseite der Konstantpumpe 66 beginnt, gegenüber dem vom Rückschlagventil 72 vorgegebenen Mindestdruck anzusteigen. Wenn der pumpenausgangsseitige Druck wieder in etwa dem Betriebsdruck im geschlossenen Kreislauf 58 entspricht, ist der Betriebszustand des Kettenfahrzeugs 50 erreicht.

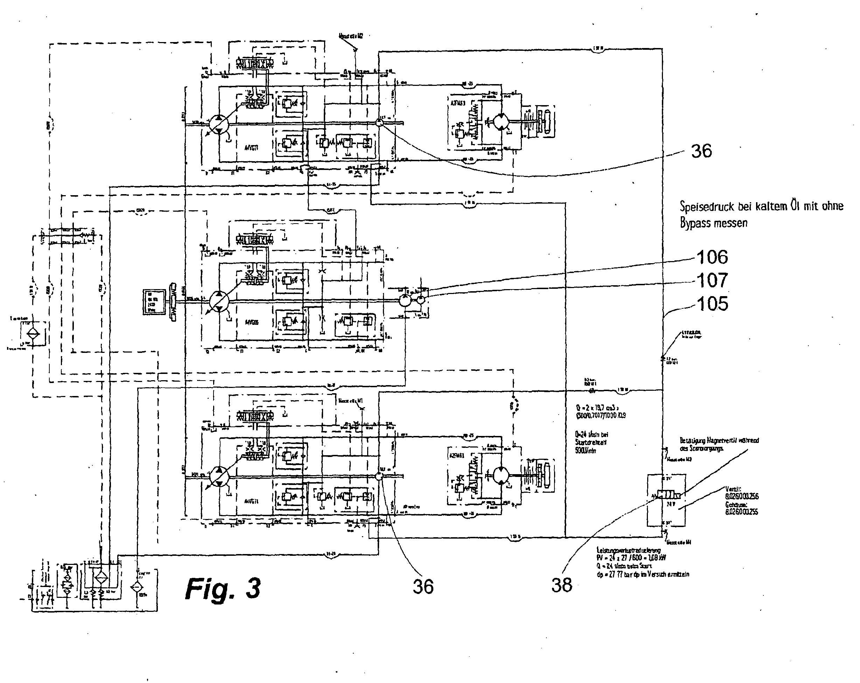

Die Ausführungsform gemäß Fig. 3 zeigt ein Blockschaltbild eines Antriebssystems für ein Kettenfahrzeug gemäß Fig. 1, bei dem die Antriebsteile beider Kettenlaufwerkseiten dargestellt sind. Diese Zeichnung ergänzt die bereits zuvor ausgeführte Offenbarung zur Ausführungsform nach Fig. 1. Beide Speisepumpen 36 sind gemäß Fig. 3 in einem gemeinsamen Überbrückungskreislauf 105 integriert, dem ein einzelnes Magnetventil 38 zugeordnet ist. Dadurch können in einer Startphase der Antriebsmaschine beide Speisepumpen 36 gleichzeitig kurzgeschlossen werden, entsprechend den zuvor ausführlich beschriebenen Funktionsvarianten. Darüber hinaus sind zwei weitere Speisepumpen 106, 107 mit der Abtriebswelle der Antriebsmaschine wirkverbunden. Diese Speisepumpen dienen der Druckversorgung von weiteren hydraulisch betriebenen Systemen des Kettenfahrzeugs wie einem Windenantrieb, einem hydraulischen Lüfterantrieb für die Antriebsmaschine sowie der Arbeitshydraulik des Heckträgers und des frontseitigen Anbaus. In nicht dargestellten weiteren Ausführungsformen der Erfindung sind diese Speisepumpen 106, 107 ebenfalls in den gemeinsamen Überbrückungskreislauf 105 integriert bzw. weisen eine eigene Überbrückungsleitung auf.

## Patentansprüche

1. Antriebssystem für ein Kettenfahrzeug mit einer Antriebsmaschine (10; 80) und mindestens einem mit einem Abtrieb (12; 82) der Antriebsmaschine (10; 80) mechanisch gekoppelten Hydraulikpumpe (36; 66), wobei der mindestens einen Hydraulikpumpe (36; 66) mindestens ein Steuermittel (38; 70) in Form eines hydraulischen Stellmittels (38; 70) zugeordnet ist, das eine Leistungsaufnahme der mindestens einen Hydraulikpumpe (36; 66) in einer Startphase der Antriebsmaschine (10; 80) zeitweilig gegenüber einer Leistungsaufnahme in einem Betriebszustand der Hydraulikpumpe (36; 66) unter Aufrechterhaltung der mechanischen Kopplung verringert, wobei hierfür eine Überbrückungsleitung (32d; 62a) vorgesehen ist, mittels derer der Pumpenausgang (30a; 66a) mit dem Pumpeneingang (36b; 66b) verbunden ist, wobei das der Hydraulikpumpe (36; 66) zugeordnete Stellmittel (38; 70) ein Ventil (38; 70) umfasst, durch das die Überbrückungsleitung (32d; 62a) steuerbar ist,
**dadurch gekennzeichnet, dass**
dass ein vorzugsweise federbelastetes Rückschlagventil (40; 72) in der Überbrückungsleitung (32d, 62a) vorgesehen ist, welches pumpenausgangsseitig einen Mindestdruck gewährleistet.

2. Antriebssystem für ein Kettenfahrzeug,
**dadurch gekennzeichnet, dass**
das Ventil (38; 70) als elektrisch betätigtes Magnetventil (38; 70) ausgebildet ist.

3. Antriebssystem nach Anspruch 1 oder 2,
**dadurch gekennzeichnet, dass**
die Überbrückungsleitung (32d; 62a) und das Stellmittel (38; 70) in ein Gehäuse der Hydraulikpumpe (36; 66) integriert sind.

4. Antriebssystem nach einem der Ansprüche 1 bis 3,
**dadurch gekennzeichnet, dass**
die Hydraulikpumpe (36; 66) eine Speisepumpe (36; 66) ist, mittels derer der Betriebsdruck in einem hydrostatischen Antriebskreislauf (26; 58) des Antriebssystems aufrechterhalten wird.

5. Antriebssystem nach mindestens einem der vorstehenden Ansprüche,
**dadurch gekennzeichnet, dass**
das Steuermittel (70) ein Zeitverzögerungsmittel (100) umfasst, welches eine mit einem Steuersignal bezweckte Steuerwirkung des Steuermittels (70) zeitlich gegenüber einem Empfang des Steuersignals verzögert.

6. Antriebssystem nach einem der vorstehenden Ansprüche,
**dadurch gekennzeichnet, dass**
das Steuermittel unmittelbar mit einem Starter des Fahrzeugs verbunden und so ausgebildet ist, dass es für die Dauer eines anliegenden Starterstroms eine Steuerwirkung bewirkt.

7. Antriebssystem nach einem der vorstehenden Ansprüche,
**gekennzeichnet durch**
einen mit dem Abtrieb (12) der Antriebsmaschine (10) mechanisch lösbar wirkverbundenen Anlasser (18) sowie einen Sensor (44) zur Ermittlung des Kopplungszustandes von Anlasser (18) und Abtrieb (12), wobei zwischen dem Sensor (44) und dem Steuermittel eine Steuerleitung vorgesehen ist.

8. Antriebssystem nach einem der vorstehenden Ansprüche,
**dadurch gekennzeichnet, dass**
das Steuermittel (70) mit einem an den Abtrieb (82) der Antriebsmaschine (80) gekoppelten Drehzahlgeber (86) verbunden und so ausgebildet ist, dass eine Steuerwirkung in Abhängigkeit einer ermittelten Drehzahl bewirkt wird.

9. Antriebssystem nach einem der vorstehenden Ansprüche,
**dadurch gekennzeichnet, dass**
das Steuermittel (70) mit einem elektronischen Steuergerät (100) verbunden ist, welches in Abhängigkeit von Fahrparametern, Parametern des hydraulischen Antriebssystems und/oder Umgebungsparametern das Steuermittel (70) steuert.

## Claims

1. Drive system for a tracked vehicle having a drive machine (10; 80) and at least one hydraulic pump (36; 66) mechanically coupled to a power take-off (12; 82) of said drive machine (10; 80), where the at least one hydraulic pump (36; 66) is assigned at least one control means (38; 70) in the form of a hydraulic adjusting means (38; 70) that temporarily reduces a power input of the at least one hydraulic pump (36; 66) in a starting phase of the drive machine (10; 80) compared with a power input in an operating state of the hydraulic pump (36; 66) while maintaining the mechanical coupling, where to do so a bypass line (32d; 62a) is provided by means of which the pump outlet (30a; 66a) is connected to the pump inlet (36b; 66b), where the adjusting means (38; 70) assigned to the hydraulic pump (36; 66) comprises a valve by which the bypass line (32d; 62a) is controllable,
**characterized in that**
a preferably spring-loaded non-return valve (40; 72) is provided in the bypass line (32d; 62a) and ensures a minimum pressure on the pump outlet side.

2. Drive system for a tracked vehicle,
**characterized in that**
the valve (38; 70) is designed as an electrically operated solenoid valve (38; 70).

3. Drive system according to Claim 1 or 2,
**characterized in that**
the bypass line (32d; 62a) and the adjusting means (38; 70) are integrated into a housing of the hydraulic pump (36; 66).

4. Drive system according to one of Claims 1 to 3,
**characterized in that**
the hydraulic pump (36; 66) is a feed pump (36; 66) by means of which the operating pressure is maintained in a hydrostatic drive circuit (26; 58) of the drive system.

5. Drive system according to at least one of the preceding claims,
**characterized in that**
the control means (70) comprises a time-delay means (100) which delays a control effect by the control means (70) intended with a control signal relative to a reception of the control signal.

6. Drive system according to one of the preceding claims,
**characterized in that**
the control means is directly connected to a starting device of the vehicle and designed such that it achieves a control effect for the duration of an applied starting device current.

7. Drive system according to one of the preceding claims,
**characterized by**
a starter (18) in operative and mechanically releasable connection with the power take-off of the drive machine and a sensor (44) for ascertaining the coupling state of the starter (18) and power take-off (12), where a control line is provided between the sensor (44) and the control means.

8. Drive system according to one of the preceding claims,
**characterized in that**
the control means (70) is connected to a speed encoder (86) coupled to the power take-off (82) of the drive machine (80) and designed such that a control effect is achieved depending on an ascertained speed.

9. Drive system according to one of the preceding claims,
**characterized in that**
the control means (70) is connected to an electronic control unit (100) which controls the control means (70) depending on driving parameters, parameters of the hydraulic drive system and/or ambient parameters.

## Revendications

1. Système de propulsion pour un véhicule à chenilles, avec un moteur d'entraînement (10 ; 80) et au moins une pompe hydraulique (30 ; 66) couplée mécaniquement à une prise de mouvement (12 ; 82) du moteur d'entraînement (10 ; 80), sachant qu'à l'au moins une pompe hydraulique (36 ; 66) est associé au moins un moyen de commande (38 ; 70) sous forme d'un moyen de réglage hydraulique (38 ; 70) qui, dans une phase de démarrage du moteur d'entraînement (10 ; 80) réduit temporairement une puissance absorbée de l'au moins une pompe hydraulique (36 ; 66) par rapport à une puissance absorbée dans un état de marche de la pompe hydraulique (36 ; 66) sous maintien du couplage mécanique, sachant qu'est prévue à cet effet une conduite de pontage (32d ; 62a) au moyen de laquelle la sortie de pompe (30a ; 66a) est reliée à l'entrée de pompe (36b ; 66b), le moyen de réglage (38 ; 70) associé à la pompe hydraulique (36 ; 66) comprenant une vanne (38 ; 70) par laquelle peut être commandée la conduite de pontage (32d ; 62a),
**caractérisé en ce**
**que** dans la conduite de pontage (32d, 62a) est prévu un clapet antiretour (40 ; 72), de préférence équilibré par ressort, qui assure une pression minimale du côté de la sortie de la pompe.

2. Système de propulsion pour un véhicule à chenilles,
**caractérisé en ce**
la vanne (38 ; 70) est conçue comme vanne magnétique (38 ; 70) actionnée électriquement.

3. Système de propulsion selon la revendication 1 ou 2,
**caractérisé en ce**
la conduite de pontage (32d ; 62a) et le moyen de réglage (38 ; 70) sont intégrés dans un corps de la pompe hydraulique (36 ; 66).

4. Système de propulsion selon l'une des revendications 1 à 3,
**caractérisé en ce**
la pompe hydraulique (36 ; 66) est une pompe d'alimentation (36 ; 66) au moyen de laquelle la pression de service est maintenue dans un circuit de propulsion hydrostatique (26 ; 58) du système de propulsion.

5. Système de propulsion selon au moins une des revendications précédentes,
**caractérisé en ce**
**que** le moyen de commande (70) comprend un moyen de temporisation (100) qui retarde par rapport à la réception d'un signal de commande l'effet de commande du moyen de commande (70) initié par un signal de commande.

6. Système de propulsion selon l'une des revendications précédentes,
**caractérisé en ce**
**que** le moyen de commande est directement relié à un dispositif de démarrage du véhicule et conçu de manière telle qu'il provoque un effet de commande pour la durée d'application d'un courant au dispositif démarrage.

7. Système de propulsion selon l'une des revendications précédentes,
**caractérisé par**
un démarreur (18) relié activement et mécaniquement de manière détachable à la prise de mouvement (12) du moteur d'entraînement (10), ainsi que par un capteur (44) pour détecter l'état de couplage du démarreur (18) et de la prise de mouvement (12), une ligne pilote étant prévue entre le capteur (44) et le moyen de commande.

8. Système de propulsion selon l'une des revendications précédentes,
**caractérisé en ce**
le moyen de commande (70) est relié à un transmetteur tachymétrique (86) couplé à la prise de mouvement (82) du moteur d'entraînement (80) et conçu de manière telle qu'un effet de commande est provoqué en fonction d'une vitesse de rotation détectée.

9. Système de propulsion selon l'une des revendications précédentes,
**caractérisé en ce**
**que** le moyen de commande (70) est relié à un boîtier de commande électronique (100) qui pilote le moyen de commande (70) en fonction de paramètres de conduite, de paramètres du système de propulsion hydraulique et/ou de paramètres ambiants.
